# EUROPEAN PATENT APPLICATION

(11) **EP 4 530 546 A1**
(43) Date of publication of application: **02.04.2025**
(21) Application number: 23850257.9
(22) Date of filing: 27.06.2023
(51) Int. Cl.: F24F 8/80, F24F 13/20, F24F 13/08, F24F 11/70, H02J 50/00, F21V 33/00, A47B 37/00, A47B 13/08

(54) **AIR PURIFIER**

(30) Priority: 02.08.2022 KR 20220096203
(71) Applicant: LG Electronics Inc., Yeongdeungpo-gu Seoul 07336 (KR)
(72) Inventor: PARK, Kibbum, Seoul 08592 (KR); BAEK, Seungho, Seoul 08592 (KR); LEE, Kyunam, Seoul 08592 (KR); YOO, Seungmin, Seoul 08592 (KR); JUNG, Soonho, Seoul 08592 (KR)
(74) Representative: Vossius & Partner Patentanwälte Rechtsanwälte mbB
(86) International application number: PCT/KR2023/008901
(87) International publication number: WO 2024/029747

(57) **Abstract**

The present disclosure relates to an air cleaner. An air cleaner according to one aspect of the present disclosure includes a first body including an intake port and a discharge port, a fan disposed inside the first body and disposed between the intake port and the discharge port, and a second body facing the discharge port, spaced apart from the discharge port, and detachably coupled to the first body, wherein the second body is formed to be larger than the discharge port.

## Description

### [Technical Field]

The present disclosure relates to an air cleaner.

### [Background Art]

An air cleaner is a device that purifies sucked indoor air and supplies the purified air indoors.

An air cleaner includes a fan that sucks indoor air into a case and a filter that filters out foreign substances contained in the air sucked in by the fan.

The air cleaner is generally provided with a discharge port at the top in order to supply purified air to more distant locations in the indoor space. Accordingly, the air purified inside the air cleaner case is discharged upward by the fan and spreads into the indoor space.

Recently, demand for air cleaners having functions other than air purification has increased. For example, user demand for a table-type air cleaner that allows items to be placed on top of the air cleaner is increasing.

However, in conventional air cleaners, discharge ports are formed on the upper side and thus the purified air is discharged upward, making it difficult to use the upper part of an air cleaner as a table.

In addition, since conventional air cleaners discharge purified air upward, there is a problem that the discharged air does not reach a user and spreads to a location far from the user. In this case, when the position of the discharge port is changed such that the purified air is supplied toward the user, there is a problem that the discharged air flows back into the intake port.

### [Disclosure]

### [Technical Problem]

An object of the present disclosure is to solve the above-described problems and other problems.

Another object of the present disclosure is to provide an air cleaner whose upper part can function as a table.

Another object of the present disclosure is to provide an air cleaner that allows a user to easily attach and detach a table.

Another object of the present disclosure is to provide an air cleaner capable of minimizing the impact on a discharge grill due to the table being attached and detached and preventing damage to the discharge grill.

Another object of the present disclosure is to form an airflow discharged from an air cleaner in a radial form.

Another object of the present disclosure is to guide a flow direction of air discharged through a discharge port.

Technical objects to be achieved by the present disclosure are not limited to the aforementioned technical objects, and other technical objects not described above may be evidently understood by a person having ordinary skill in the art to which the present disclosure pertains from the following description.

### [Technical Solution]

To achieve the above-described or other objects, according to one aspect of the present disclosure, an air cleaner may include a first body including an intake port and a discharge port. The air cleaner may include a fan disposed inside the first body and disposed between the intake port and the discharge port. The air cleaner may include a second body facing the discharge port, spaced apart from the discharge port, and detachably coupled to the first body. The second body may be formed to be larger than the discharge port. Accordingly, a discharge space is formed between the second body and the discharge port. Accordingly, the air discharged into the discharge space can be sprayed 360 degrees through the second body that is larger than the discharge port.

The air cleaner may include a path formed between the discharge port and the second body. The path may be formed over 360 degrees. Accordingly, the air discharged into the discharge space can be radially discharged 360 degrees and spread throughout the indoor space.

The second body may include a lower wall facing the discharge port. The lower wall of the second body may extend curved upward in a direction perpendicular to the longitudinal direction of the first body. Accordingly, the discharged air can be sprayed upward in the radial direction of the air cleaner.

The first body may include a coupling part disposed between the first body and the second body and coupled to the second body. The coupling part may include a first part facing the discharge port and including a lower wall spaced apart from the discharge port. The coupling part may include a second part extending upward from the first part and coupled to the second body. The lower wall of the second body may be connected to the lower wall of the first part and may not overlap the discharge port in the longitudinal direction of the first body. Accordingly, by detaching the second body, the impact applied to the discharge grill installed in the discharge port can be minimized. Therefore, damage to the discharge grill can be prevented.

The lower wall of the first part may extend curved upward in a direction perpendicular to the longitudinal direction of the first body. The lower wall of the second body may be formed to curve upward from the lower wall of the first part in the direction perpendicular to the longitudinal direction of the first body. Accordingly, a two-stage guide structure that guides the discharged air radially upward can be implemented. Specifically, air can be primarily guided by the lower wall of the first part and secondarily guided by the lower wall of the second body. Accordingly, the discharged air can be guided radially and upward.

The lower wall of the first part may have a first curvature. The lower wall of the second body may have a second curvature greater than the first curvature. Accordingly, the degree of bending of the lower wall increases as it moves upward, allowing air to be sprayed farther. Additionally, the discharged air may spread throughout the indoor space.

The first body may include a discharge grill, one end of which is coupled to an edge of the discharge port and the other end of which is coupled to the lower wall of the first part. The other end of the discharge grill may be disposed inside an edge of the lower wall of the first part. Accordingly, damage to the discharge grill installed in the discharge port can be prevented by detaching the second body.

The second body may include a lower body including the lower wall of the second body. The second body may include an upper body disposed on the lower body. The lower body may include an insertion recess formed in the lower wall of the lower body, the second part of the coupling part being inserted into the insertion recess. Accordingly, the second body can be coupled to the coupling part fixed to the first body. Accordingly, the second body can be spaced apart from the discharge port.

The coupling part may include a first protrusion protruding from the upper wall of the second part and having a height increasing toward the radial outer side of the coupling part. The second body may include a second protrusion formed in the insertion recess of the lower body, having a height decreasing toward the radial outer side of the first body, and aligned with the first protrusion vertically. A contact surface of the first protrusion and the second protrusion may form a flat surface. The second body may be fixed to the coupling part through a fastening member coupled to the first protrusion by penetrating the second protrusion. Accordingly, the second body can be coupled to or separated from the coupling part through the fastening member. In addition, the fastening force and fixing force can be increased by forming the part where the fastening member is fastened to be flat.

The coupling part may include a coupling recess formed in a side wall of the second part. The coupling recess may include a first coupling recess formed in the side wall of the second part and open to the upper wall of the second part. The coupling recess may include a second coupling recess extending from the first coupling recess by a predetermined length along the circumference of the second part and formed between the upper wall of the second part and the lower wall of the first part. The insertion recess of the second body may include a first surface facing the upper wall of the second part. The insertion recess may include a second surface connected to the first surface. The insertion recess may include a coupling protrusion protruding from the second surface and aligned with the first coupling recess vertically. The coupling protrusion may be moved from the first coupling recess to the second coupling recess when the second body is rotated. Accordingly, the second body can be easily coupled to or separated from the coupling part according to the rotation of the second body.

The air cleaner may include a top cover coupled to the upper surface of the second body. The top cover may be formed in a flat shape. Accordingly, the second body can be used as a table.

The second body may include a first member. The top cover may include a second member coupled to the first member. One of the first member and the second member may be provided as a magnet. The other one of the first member and the second member may be provided as a metal member. Accordingly, the top cover can be easily branched from the second body. Accordingly, a user can easily replace the top cover with a top cover having a desired shape and material.

The second body may include a lower body including the lower wall of the second body. The second body may include an upper body disposed between the lower body and the top cover. The upper body may include a center part coupled to the lower wall of the lower body. The upper body may include an edge part located at a higher position than the center part and including a flat surface. The upper body may include a middle part connecting the center part and the edge part and spaced apart vertically from the lower wall of the lower body. The first member may be disposed on the edge part. Accordingly, the utilization of the internal space of the second body can be increased, and in particular, connection lines such as cables can be accommodated in the internal space of the second body such that they are not exposed to the outside. Accordingly, the aesthetics of the exterior can be improved.

The air cleaner may include a wireless charging device disposed on the second body and exposed from the upper surface of the top cover. The second body may include a plate protruding upward from the center part and formed at a lower position than the edge part. The second body may include a partition wall surrounding the circumference of the plate and disposed on the same plane as the edge part. The wireless charging device may be disposed in a space defined by the plate and the partition wall. Accordingly, the cable for wireless charging may not be exposed to the outside of the second body, and the user can easily perform wireless charging through the top cover.

The air cleaner may include a wireless charging device disposed on the second body and exposed from the upper surface of the top cover. The wireless charging device may include a first wireless charging unit disposed on the second body. The wireless charging device may include a second wireless charging unit disposed above the first wireless charging unit and having a larger area than the first wireless charging unit. The wireless charging device may include a vertical member disposed between the first wireless charging unit and the second wireless charging unit and electrically connecting the first wireless charging unit and the second wireless charging unit. Accordingly, the user can wirelessly charge a plurality of electronic devices at the same time. Additionally, the user can use the second wireless charging unit as an auxiliary table while wireless charging is not performed.

The air cleaner may include a wireless charging device disposed on the second body and exposed from the upper surface of the top cover. The wireless charging device may include a wireless charging unit disposed on the second body. The wireless charging device may include a vertical member electrically connected to the wireless charging unit and extending upward from the wireless charging unit. The wireless charging device may include a lamp coupled to the vertical member and electrically connected to the vertical member. The wireless charging device may be detachable from the second body. Accordingly, it is possible to simultaneously charge electronic devices wirelessly through the wireless charging unit and adjust indoor brightness through the lamp. Additionally, the lamp can be used portably.

The air cleaner may include a light disposed on the lower wall of the second body and radiating light to a lower side of the second body. Accordingly, the aesthetics of the air cleaner may be improved.

The air cleaner may include a wireless charging device disposed on the second body, and a controller for controlling the wireless charging device and the light. The controller may control on/off of the light in association with the wireless charging device. By controlling the wireless charging device and light in association, the user can easily check the status of the electronic device being charged by the wireless charging device.

The controller may control the light such that the light is turned on when the wireless charging device is operated. The controller may control the light such that the light blinks when operation of the wireless charging device is stopped. Accordingly, the user can easily check whether wireless charging is completed even from a distance.

Specific details of other embodiments are included in the detailed description and drawings.

### [Advantageous Effects]

The effects of the air cleaner according to the present disclosure will be described as follows.

According to at least one embodiment of the present disclosure, it is possible to provide an air cleaner whose upper part can function as a table.

According to at least one embodiment of the present disclosure, it is possible to provide an air cleaner that allows a user to easily attach and detach a table.

According to at least one embodiment of the present disclosure, it is possible to provide an air cleaner capable of minimizing the impact on a discharge grill due to the table being attached and detached and preventing damage to the discharge grill.

According to at least one embodiment of the present disclosure, it is possible to form an airflow discharged from an air cleaner in a radial form.

According to at least one embodiment of the present disclosure, it is possible to guide a flow direction of air discharged through a discharge port.

The effects of the present disclosure are not limited to the aforementioned objects, and other objects not described above may be evidently understood by a person having ordinary skill in the art to which the present disclosure pertains from the following description.

### [Description of Drawings]

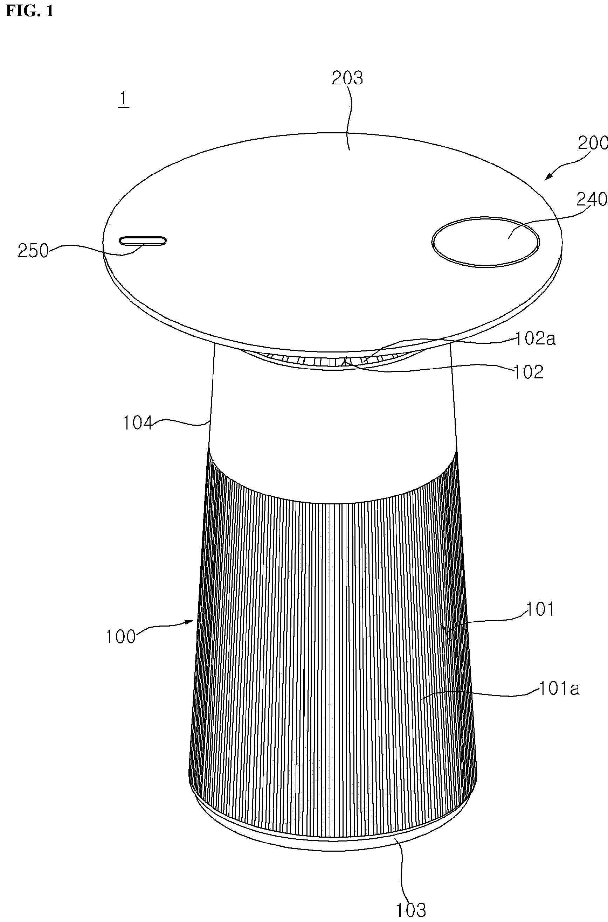

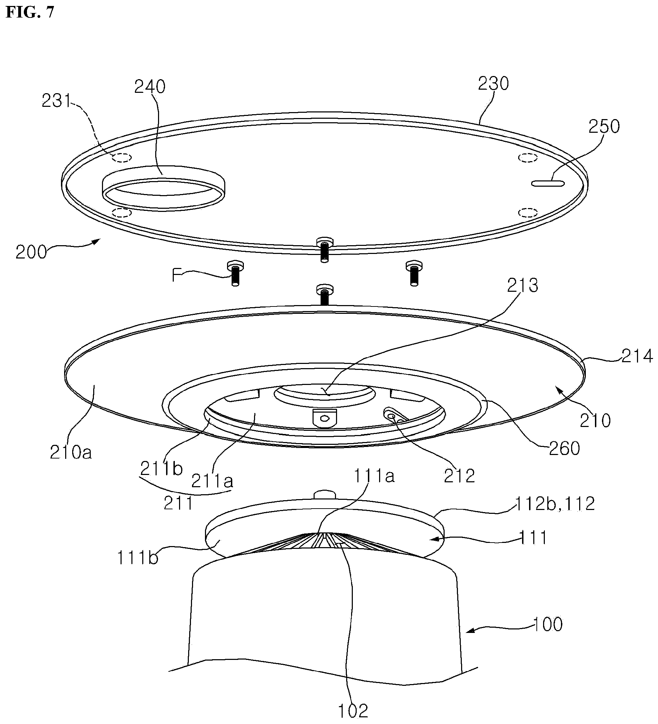

FIG. 1 to FIG. 18 are diagrams illustrating embodiments of an air cleaner according to embodiments of the present disclosure.

### [Mode for Disclosure]

Hereinafter, embodiments disclosed in the present specification will be described in detail with reference to the attached drawings. However, identical or similar components will be assigned the same reference numeral, and redundant descriptions thereof will be omitted.

The suffixes "module" and "unit" of elements herein are used for convenience of description and thus can be used interchangeably and do not have any distinguishable meanings or functions.

In the following description of the embodiments disclosed in the present specification, a detailed description of known functions and configurations incorporated herein will be omitted when it may obscure the subject matter of the present invention. In addition, the accompanying drawings are provided only for ease of understanding of the embodiments disclosed in the present specification, do not limit the technical spirit disclosed herein, and include all changes, equivalents, and substitutes included in the spirit and scope of the present invention.

The terms "first" and/or "second" are used to describe various components, but such components are not limited by these terms. The terms are used to discriminate one component from another component.

When a component is "coupled" or "connected" to another component, it should be understood that a third component may be present between the two components although the component may be directly coupled or connected to the other component. When a component is "directly coupled" or "directly connected" to another component, it should be understood that no element is present between the two components.

An element described in the singular form is intended to include a plurality of elements unless the context clearly indicates otherwise.

Hereinafter, an air cleaner 1 according to an embodiment of the present disclosure will be described with reference to the drawings.

Referring to FIG. 1, the air cleaner 1 may include a first body 100. The first body 100 may be located at the lower part of the air cleaner 1. The first body 100 may form the exterior of the air cleaner 1. The first body 100 may form part of the exterior of the air cleaner 1. The first body 100 may extend in the vertical direction. The first body 100 may have a central axis connecting the center of the upper surface of the first body 100 and the center of the lower surface of the first body 100. The central axis of the first body 100 may be a vertical axis. The first body 100 may have a cylindrical shape. The diameter of the upper surface of the first body 100 may be less than the diameter of the lower surface of the first body 100. The first body 100 may have a cylindrical shape whose diameter becomes smaller from the bottom to the top. The first body 100 may have a space therein.

The first body 100 may include an intake port 101. The intake port 101 may be formed along the circumferential surface of the first body 100. The intake port 101 may be formed on at least a portion of the circumferential surface of the first body 100. The intake port 101 may be formed in the lower part of the first body 100. The intake port 101 may be open in the radial direction of the first body 100. The intake port 101 may be open in a direction perpendicular to the longitudinal direction of the first body 100. The intake port 101 may communicate with the internal space of the first body 100 and the external space of the air cleaner 1. The intake port 101 may communicate with the internal space of the first body 100 and the space where the air cleaner 1 is installed. For example, the intake port 101 may communicate the internal space of the first body 100 with the indoor space. Air outside the air cleaner 1 may flow into the internal space of the first body 100 through the intake port 101.

The first body 100 may include a discharge port 102. The discharge port 102 may be formed at the top of the first body 100. The discharge port 102 may communicate the internal space of the first body 100 with the external space of the first body 100. Air introduced into the internal space of the first body 100 through the intake port 101 may be discharged to the outside of the first body 100 through the discharge port 102. The discharge port 102 may be formed on the upper surface of the first body 100. The discharge port 102 may be open in the vertical direction. The discharge port 102 may be open in the longitudinal direction of the first body 100. Air inside the first body 100 may be discharged upward through the discharge port 102.

The first body 100 may include a base 103. The base 103 may be formed in the lower part of the first body 100. The first body 100 may be spaced apart from the discharge port 102 in the longitudinal direction of the first body 100. The base 103 may be coupled to the lower surface of the first body 100. The base 103 may be in contact with the ground.

The first body 100 may include an outer wall 104. The outer wall 104 may form the outer surface of the first body 100. The outer wall 104 may form the peripheral surface of the first body 100. The outer wall 104 may be located on the top of the first body 104. The outer wall 104 may be located above the intake port 101. The outer wall 104 may connect the top of the intake port 101 and the top surface of the first body 100. The length of the outer wall 104 in the longitudinal direction the first body 100 may be less than the length of the intake port 101 in the longitudinal direction of the first body 100.

The first body 100 may include a suction grill 101a. The suction grill 101a may be attached/detached to/from the first body 100. The suction grill 101a may extend in the longitudinal direction of the first body 100. The suction grill 101a may be formed in the intake port 101. The suction grill 101a may be attached/detached to/from the outer wall 104. The suction grill 101a may be located between the outer wall 106and the lower surface of the first body 100. The suction grill 104 may include a plurality of suction grills. The plurality of suction grills may be disposed along the circumference of the first body 100. The plurality of suction grills may be spaced apart along the circumference of the first body 100. A plurality of suction ports 101 may be formed between the plurality of suction grills.

The first body 100 may include a discharge grill 102a. The discharge grill 102a may be attached/detached to/from the first body 100. The discharge grill 102a may be coupled to the upper surface of the first body 100. The discharge grill 102a may be formed in the discharge port 102. The discharge grill 102a may include a plurality of discharge grills 102a. The plurality of discharge grills 102a may be spaced apart from each other. A plurality of discharge holes 102 may be formed between the plurality of discharge grills 102a.

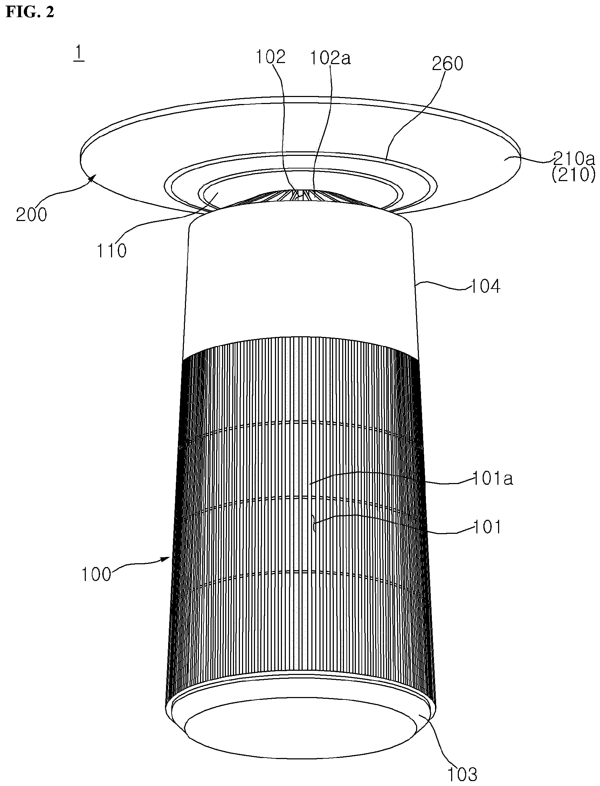

Referring to FIG. 1 and FIG. 2, the air cleaner 1 may include a second body 200. The second body 200 may be placed on the top of the air cleaner 1. The second body 200 may be disposed on the first body 100. The second body 200 may be detachably coupled to the first body 100. The second body 200 may face the discharge port 102 in the vertical direction. The second body 200 may be spaced apart from the discharge port 102 in the vertical direction. The second body 200 may cover the upper part of the discharge port 102.

The first body 100 may include a coupling part 110. The coupling part 110 may be located between the first body 100 and the second body 200. The coupling part 110 may be disposed on the top of the first body 100. The coupling part 110 may be coupled to the discharge port 102. The coupling part 110 may be fixed to the first body 100. The coupling part 110 may be spaced upward from the upper surface of the first body 100.

The second body 200 may be coupled to the coupling part 110. The second body 200 may be coupled to the first body 100 through the coupling part 110. The second body 200 may be spaced apart from the upper surface of the first body 100 in the vertical direction. The second body 200 may be spaced apart from the discharge port 102 in the vertical direction.

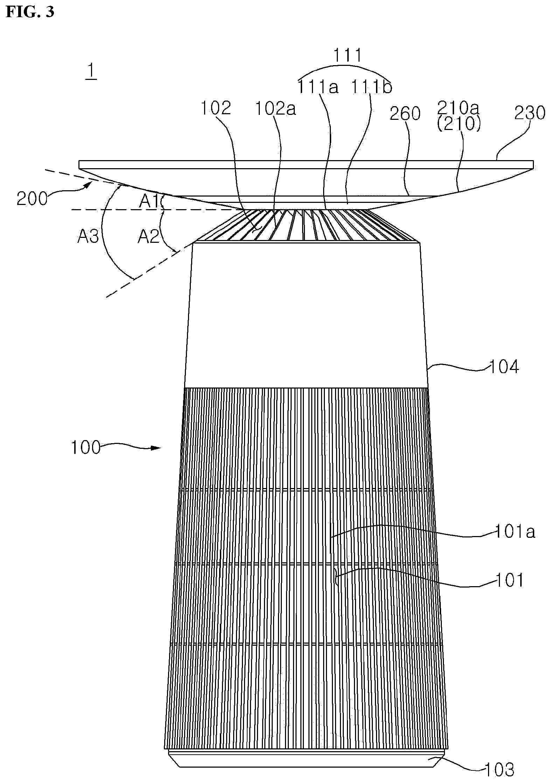

Referring to FIG. 3, the lower surface of the base 103 may be formed as a flat surface. The diameter of the lower surface of the base 103 may be less than the diameter of the lower surface of the first body 100. The diameter of the lower surface of the base 103 may be the same as or less than the diameter of the upper surface of the first body 100. The side surface of the base 103 may connect the edges of the lower surface of the base 103 and the lower surface of the first body 100. The side surface of the base 103 may be an inclined surface. The side surface of the base 103 may be an inclined surface formed to be inclined in a direction toward the central axis of the first body 100.

Alternatively, the lower surface of the base 103 may be formed to be larger than the diameter of the lower surface of the first body 100. The side surface of the base 103 may be an inclined surface connecting the lower surface of the first body 100 and the lower surface of the base 103. The side surface of the base 103 may be an inclined surface formed to be inclined in a direction away from the central axis of the first body 100.

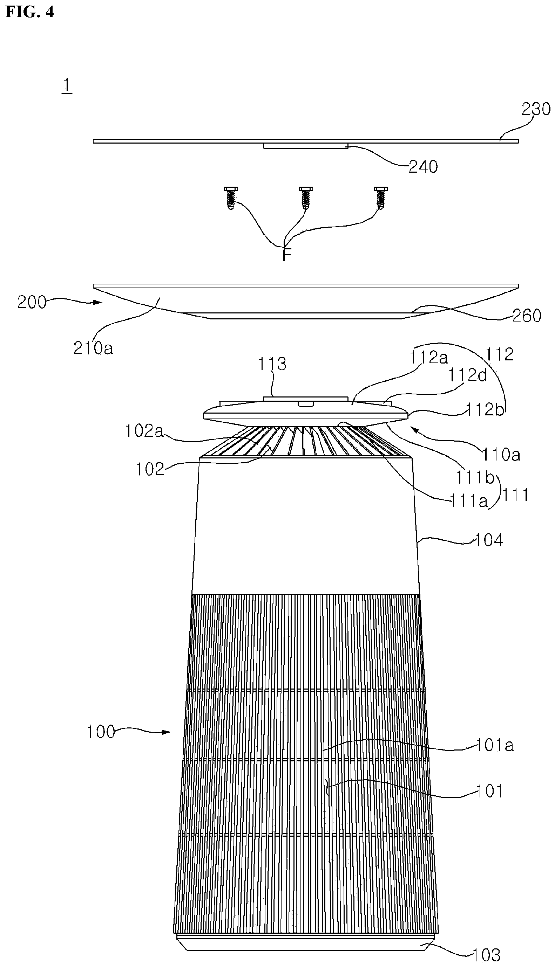

Referring to FIG. 3 and FIG. 4, the coupling part 110 may include an upper part 110a. The upper part 110a may be located outside the first body 100. The upper part 110a may be spaced upward from the upper surface of the first body 100. The upper part 110a may be spaced upward from the discharge port 102. The discharge grill 102a may be coupled to the upper part 110a. The top of the discharge grill 102a may be fixed to the upper part 110a. The upper part 110a may have a circular cross section. The diameter of the upper part 110a may be less than the diameter of the discharge port 102. The upper part 110a may overlap at least a portion of the discharge port 102 in the vertical direction. The upper part 110a may not overlap the outer edge area of the discharge port 102 in the vertical direction. The diameter of the upper part 110a may be greater than the diameter of the circle formed by the upper ends of the plurality of discharge grills 102a.

The upper part 110a may include a first part 111 and a second part 112 extending upward from the first part 111. The first part 111 and the second part 112 may be formed integrally. The discharge grill 102a may be fixed to the first part 111. The top of the discharge grill 102a may be fixed to the first part 111.

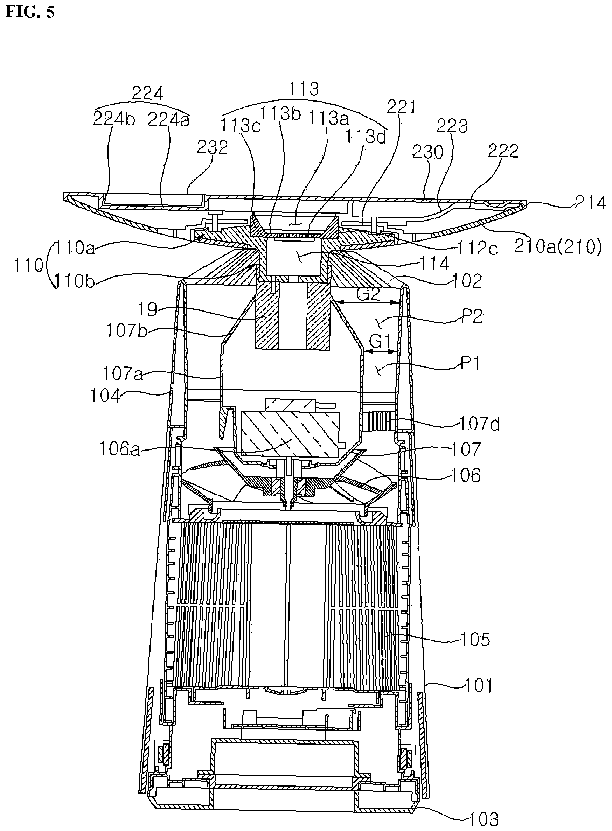

The first part 111 may include a boundary portion 111a. The boundary portion 111a may be a connection portion between the upper part 110a and a lower part 110b (refer to FIG. 5), which will be described later. The upper end of the discharge grill 102a may be coupled to the boundary portion 111a. The upper ends of the plurality of discharge grills 102a may be coupled to the boundary portion 111a. A sealing member (not shown) may be disposed between the boundary portion 111a and the upper end of the discharge grill 102a. The boundary portion 111a may extend in the circumferential direction along the direction in which the discharge port 102 extends. For example, the boundary portion 111a may have a circular ring-shaped cross section. The diameter of the boundary portion 111a may be less than the diameter of the discharge port 102.

The upper end of the discharge grill 102a may be coupled to the boundary portion 111a, and the lower end of the discharge grill 102a may be coupled to the edge of the upper surface of the first body 100. Accordingly, the discharge grill 102a may be disposed to be inclined upward toward the central axis of the first body 100. A sealing member (not shown) may be disposed between the lower end of the discharge grill 102a and the edge of the upper surface of the first body 100. The edge of the upper surface of the first body 100 may be the top of the outer wall 104.

The first part 111 may include a lower wall 111b. The lower wall 111b may face the discharge port 102. The lower wall 111b may be located above the discharge port 102 and may be spaced apart from the discharge port 102. A discharge space S may be formed between the lower wall 111b and the discharge port 102. The lower wall 111b may extend radially from the boundary portion 111a. For example, the lower wall 111b may be formed in an annular shape. The lower wall 111b may be inclined upward and extend from the boundary portion 111a. The lower wall 111b may be inclined upward toward the radial outer side of the air cleaner 1. The vertical distance between the lower wall 111b and the discharge grill 102a may increase with increasing distance from the central axis of the first body 100. The lower wall 111b may be formed as a flat inclined surface. At least a portion of the lower wall 111b may be formed as a curved surface. The lower wall 111b may be formed as a curved surface. For example, the lower wall 111b may be a curved surface that is convex downward. The lower wall 111b and the boundary portion 111a may form a first angle A1. The first angle A1 may be an acute angle. The boundary portion 111a and the discharge grill 102a may form a second angle A2. The second angle A2 may be an acute angle. The lower wall 111b and the discharge grill 102a may form a third angle A3. The third angle A3 may have a value that is the sum of the first angle A1 and the second angle A2. The third angle A3 may be an acute angle. The second angle A2 may be larger than the first angle A1. The lower wall 111b may guide the air discharged from the discharge port 102. The lower wall 111b may guide the air discharged from the discharge port 102 outward and upward with respect to the central axis of the first body 100.

The second part 112 may extend upward from the first part 111. The second part 112 may be combined with the second body 200. The second part 112 may be inserted into the second body 200. The first part 111 is located between the second body 200 and the first body 100 and may be exposed to the outside of the air cleaner 1. The second part 112 may be inserted into the second body 200 and may not be exposed to the outside of the air cleaner 1.

The second part 112 may include an upper wall 112a. The upper wall 112a may face the lower wall 111b. The upper wall 112a may face the lower wall 111b with respect to a side wall 112b, which will be described later. The upper wall 112a may extend radially from the central axis of the air cleaner 1. The upper wall 112a may be inclined downward from the center of the upper wall 112a toward the outer radial direction. The vertical distance between the upper wall 112a and the discharge port 102 may decrease with increasing distance from the central axis of the air cleaner 1. The upper wall 112a may be formed as a flat inclined surface. At least a portion of the upper wall 112a may be formed as a curved surface. The upper wall 112a may be formed as a curved surface. For example, the lower wall 111b may be a curved surface that is convex upward.

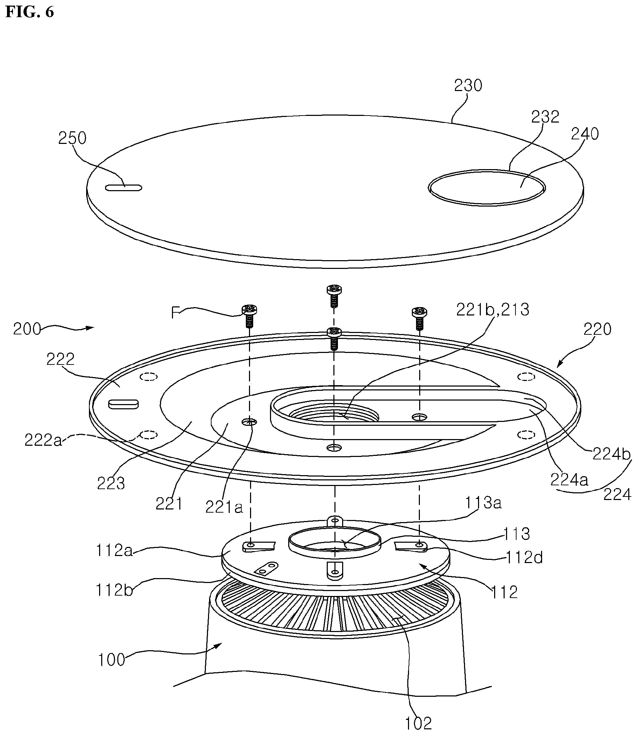

The upper wall 112a may include a first protrusion 112d protruding from the upper surface of the upper wall 112a. The first protrusion 112d may include a plurality of first protrusions 112d. The plurality of first protrusions 112d may be spaced apart from each other in the circumferential direction of the upper part 110a (refer to FIG. 6). For example, the plurality of first protrusions 112d may include four first protrusions 112d. A recess (not indicated, refer to FIG. 6) may be formed in the first protrusion 112d. The recess (not indicated) in the first protrusion 112d may be open to the upper side of the upper part 110a. A fastening member F may be inserted into the recess (not indicated) of the first protrusion 112d. The second body 200 may be fixed to the coupling part 110 through the fastening member F inserted into the recess (not indicated) of the first protrusion 112d. For example, the fastening member F may be a screw.

The second part 112 may include the side wall 112b. The side wall 112b may connect the upper wall 112a and the lower wall 111b. The side wall 112b may connect the edge of the lower wall 111b and the edge of the upper wall 112a. The edge of the lower wall 111b and the edge of the upper wall 112a may overlap in the vertical direction.

Referring to FIG. 4 and FIG. 5, the coupling part 110 may include the lower part 110b. The lower part 110b may be located below the upper part 110a. The lower part 110b may be coupled to the first part 111. The lower part 110b may extend downward from the boundary portion 111a of the first part 111. The diameter of the lower part 110b may be less than the diameter of the upper part 110a. The lower part 110b may be fixed to the first body 100. The lower part 110b may be located inside the plurality of discharge grills 102a. The central axis of the lower part 110b and the central axis of the upper part 110a may be coaxial. The central axis of the coupling part 110 and the central axis of the first body 100 may be coaxial. The central axis of the coupling part 110 and the central axis of the air cleaner 1 may be coaxial.

The coupling part 110 may include recesses 112c and 114. The recesses 112c and 114 may include a first recess 112c. The first recess 112c may be formed by being recessed downward from the upper wall 112a of the upper part 110a. The first recess 112c may be formed in the second part 112 of the upper part 110a. The first recess 112c may be formed in the central portion of the upper part 110a. The first recess 112c may be open to the upper side of the upper part 110a.

The recesses 112c and 114 of the coupling part 110 may include a second recess 114. The second recess 114 may be formed on the bottom surface (not shown) of the first recess 112c. The second recess 114 may be formed by being recessed downward from the bottom surface (not shown) of the first recess 112c. The second recess 114 may be formed in the first part 111 and the lower part 110b of the upper part 110a. The second recess 114 may communicate with the first recess 112c.

The first recess 112c and the second recess 114 may have a circular shape. The diameter of the first recess 112c may be greater than the diameter of the second recess 114. The vertical depth of the first recess 112c may be less than the vertical depth of the second recess 114. The first recess 112c may be referred to as a seating recess, and the second recess 114 may be referred to as a receiving recess.

The coupling part 110 may include a mount 113. The mount 113 may be coupled to the upper part 110a. The mount 113 may be coupled to the first recess 112c. The mount 113 may be seated on the bottom surface (not shown) of the first recess 112c. The mount 113 may have a circular cross section (refer to FIG. 6). The mount 113 may include a bottom wall 113b seated on the bottom surface (not shown) of the first recess 112c, and a side wall 113c extending upward from the edge of the bottom wall 113b. The mount 113 may include a mount recess 113a that opens to the upper side of the upper part 110a. The mount recess 113a may refer to an area defined by the bottom wall 113b and the side wall 113c. The outer edge area of the bottom wall 113b may be seated on the bottom surface (not shown) of the first recess 112c, and the central area of the bottom wall 113b may face the second recess 114. The vertical height of the mount 113 may be greater than the vertical depth of the first recess 112c. At least a portion of the mount 113 may protrude above the upper wall 112a of the upper part 110a. The horizontal diameter of the mount recess 113a may increase from bottom to top. The inner surface (not shown) of the side wall 113c of the mount 113 may be formed to be inclined.

The first body 100 may include a terminal 113d. The terminal 113d may be placed on the mount 113. The terminal 113d may be mounted on the bottom wall 113b of the mount 113. The terminal 113d may be electrically connected to an external power source (not shown). The terminal 113d can receive power from the external power source (not shown). The connection terminal 113d may include a first terminal (not shown) and a second terminal (not shown) electrically connected to the first terminal (not shown). The first terminal (not shown) may be connected to the external power source (not shown) through a connecting member (not shown) such as a cable. The first terminal (not shown) may be mounted on the bottom wall 113b of the mount 113 and may be exposed through the second recess 114. The second recess 114 may accommodate a connecting member (not shown) such as a cable. A hole (not shown) through which a connecting member (not shown) such as a cable can pass may be formed in the bottom wall (not shown) of the lower part 110b. The second terminal (not shown) may be disposed above the first terminal (not shown), and may be electrically connected to the first terminal (not shown) through contact with the first terminal (not shown). The first terminal (not shown) may be electrically connected to electronic components which will be described later. The first terminal (not shown) may be connected to electronic components through connecting members (not shown) such as cables. The mount recess 113a may accommodate connecting members (not shown) such as cables connected to electronic components.

Referring to FIG. 5, the air cleaner 1 may include a filter 105. The filter 105 may be disposed inside the first body 100. The filter 105 may face the intake port 101. The filter 105 may face the suction grill 101a. The filter 105 can filter out foreign substances contained in the air introduced through the intake port 101. The filter 105 may be cylindrical.

The air cleaner 1 may include a fan 106. The fan 106 may be disposed inside the first body 100. The fan 106 may be rotatably disposed inside the first body 100. The fan 106 may be disposed above the filter 105. The fan 106 can suck in air outside the air cleaner 1 through the intake port 101. The fan 106 may flow the air sucked through the intake port 101 upward.

The air cleaner 1 may include a fan motor 106a. The fan motor 106a may be disposed inside the first body 100. The fan motor 106a may be disposed above the fan 106. The fan motor 106a may rotate the fan 106.

The air cleaner 1 may include a fan housing 107. The fan housing 107 may be disposed inside the first body 100. The fan housing 107 may be placed above the fan 106. The fan housing 107 may surround the fan motor 106a. The fan housing 107 may form a space where the fan motor 106a is placed. The fan housing 107 may be spaced apart from the outer wall 104 in the radial direction of the first body 100. The fan housing 107 may be disposed inside the outer wall 104.

The fan housing 107 may form discharge passages P1 and P2 for guiding the air flowing by the fan 106 upward.

The fan housing 107 may include a first housing wall 107a. The first housing wall 107a may extend in the vertical direction. The first housing wall 107a may be located above the fan 106. The first housing wall 107a may overlap the fan motor 106a in the radial direction of the first body 100. The first housing wall 107a may surround the fan motor 106a. The first housing wall 107a may be spaced apart from the inside of the outer wall 104 in the radial direction of the first body 100. The first discharge passage P1 may be formed between the first housing wall 107a and the outer wall 104.

The fan housing 107 may include a motor cover 107c. The motor cover 107c may be coupled to the bottom of the first housing wall 107a. The fan motor 106a may be coupled to the motor cover 107c. The motor cover 107c may have a ball shape to accommodate at least a portion of the fan motor 106a.

The fan housing 107 may include a second housing wall 107b. The second housing wall 107b may extend in the vertical direction. The second housing wall 107b may extend upward from the first housing wall 107a. The lower end of the second housing wall 107b may be connected to the first housing wall 107a, and the upper end of the second housing wall 107b may be connected to a support wall 19 supporting the lower end of the mount 113. The second housing wall 107b may be spaced apart from the outer wall 104 in the radial direction of the first body 100. The second housing wall 107b may be located inside the first body 100 and may be located inside the outer wall 104. The lower end of the second housing wall 107b may be located outside the upper end of the second housing wall 107b in the radial direction of the first body 100. The second housing wall 107b may be formed to be inclined. The second housing wall 107b may be inclined from bottom to top, approaching the central axis of the first body 100. The second housing wall 107b may be inclined in a direction away from the outer wall 104 from bottom to top. The second discharge passage P2 may be formed between the second housing wall 107b and the outer wall 104.

The first discharge passage P1 may have a first width G1 in the horizontal direction. The second discharge passage P2 may have a second width G2 in the horizontal direction. The first width G1 may be less than the second width G2. The second width G1 may increase from bottom to top. Accordingly, air flowing by the fan 106 can be guided upward.

The air cleaner 1 may include a vane 107d. The vane 107d may be disposed between the outer wall 104 and the fan housing 107. The vane 107d may extend in the vertical direction. The vane 107d may include a plurality of vanes 107d. The plurality of vanes 107d may be spaced apart from each other in the circumferential direction of the first body 100. The vane 107d may be disposed above the fan 106. The vane 107d may overlap the fan motor 106a in the horizontal direction. The vane 107d may be disposed in the first discharge passage P1. The vane 107d may be disposed adjacent to the fan 106 in the first discharge passage P1. The vane 107d can guide the flow direction of air flowing by the fan 106 upward. The vane 107d can guide the air flowing by the fan 106 to move to the discharge passages P1 and P2.

Referring back to FIG. 4, the second body 200 may be coupled to the first body 100. The second body 200 may be coupled to the upper side of the first body 100. The second body 200 may be coupled to the coupling part 110. The second body 200 may be detachably coupled to the coupling part 110. The second body 200 may have a larger diameter than the first body 100. The second body 200 may cover the discharge port 102. The second body 200 may be spaced apart from the discharge port 102 in the vertical direction. A discharge space S may be formed between the second body 200 and the discharge port 102. A path may be formed between the second body 200 and the discharge port 102. The path may be formed over 360 degrees.

Referring to FIG. 5, FIG. 6, and FIG. 7, the second body 200 may include a lower body 210. The lower body 210 may form the lower part of the second body 200. The lower body 210 may be coupled to the coupling part 110. The lower body 210 may face the discharge port 102. A lower wall 210a of the lower body 210 may face the discharge port 102.

The lower body 210 may include an insertion recess 211. The insertion recess 211 may be formed in the lower wall 210a of the lower body 210. The insertion recess 211 may be recessed upward from the lower wall 210a of the lower body 210. The insertion recess 211 may be formed in the central portion of the lower body 210. The coupling part 110 may be inserted into the insertion recess 211. The upper part 110a of the coupling part 110 may be inserted into the insertion recess 211. The second part 112 of the upper part 110a of the coupling part 110 may be inserted into the insertion recess 211.

The insertion recess 211 may include a first surface 211a facing the upper wall 112a of the second part 112 of the upper part 110a, and a second surface 211b connected to the first surface 211a and facing the side wall 112b of the second part 112. The first surface 211a of the insertion recess 211 may include a curved surface. The first surface 211a of the insertion recess 211 may have a curved surface corresponding to the upper wall 112a. For example, the second surface 211a of the insertion recess 211 may be formed as a curved surface that is convex upward.

The lower body 210 may include a second protrusion 212. The second protrusion 212 may be formed on the second surface 211a of the insertion recess 211. The second protrusion 212 may protrude downward from the second surface 211a of the insertion recess 211. The second protrusion 212 may overlap the first protrusion 112d of the coupling part 110 in the vertical direction. The second protrusion 212 may include a plurality of second protrusions 212. The plurality of second protrusions 212 may be spaced apart from each other in the circumferential direction. The second protrusion 212 may contact the first protrusion 112d. The number of second protrusions 212 may correspond to the number of first protrusions 112d. The fastening member F may be coupled to the coupling part 110 by penetrating the second protrusion 212 and the second protrusion 112d. Accordingly, the second body 200 may be fixed to the coupling part 110 of the first body 100.

The height of the first protrusion 112d may increase in the radial direction from the central axis of the coupling part 110. Accordingly, the upper surface of the first protrusion 112d may be formed as a flat surface. The height of the second protrusion 212 may decrease in the radial direction from the central axis of the lower body 210. Accordingly, the lower surface of the second protrusion 212 may be formed as a flat surface. Accordingly, the first protrusion 112d and the second protrusion 212 can be in surface contact, and the fastening member F can be more firmly coupled.

The lower body 210 may include a first mount hole 213. The first mount hole 213 may be formed in the first surface 211a of the insertion recess 211. The first mount hole 213 may be formed by penetrating the central portion of the first surface 211a of the insertion recess 211. The mount 113 may be inserted into the first mount hole 213. The top of the side wall 113c of the mount 113 may be inserted into the first mount hole 213. The inner space of the mount recess 113a may communicate with the inner space of the second body 200. A cable (not shown) connected to the connection terminal 113d and accommodated in the mount recess 113a may be connected to electronic components through the internal space of the second body 200.

The lower body 210 may include the lower wall 210a. The lower wall 210a may face the discharge port 102. The lower wall 210a may be spaced upward from the discharge port 102. The lower wall 210a may be spaced upward from the discharge grill 102a. A separation space S may be formed between the lower wall 210a and the discharge port 102 or the discharge grill 102a. The separation space S may be a discharge space S to which air discharged from the discharge port 102 is discharged. The lower wall 210a may obliquely extend upward from the insertion recess 211 of the second body 200. The lower wall 210a may be formed to be inclined toward the outer radial direction of the second body 200. The vertical separation distance between the lower wall 210a and the discharge port 102 may increase in the radial direction from the central axis of the air cleaner 1.

The lower wall 210a of the second body 200 may be connected to the lower wall 111b of the upper part 110a of the coupling part 110. The lower wall 210a of the second body 200 may be formed as an inclined surface. The lower wall 210a may be formed as an inclined surface having the same inclination as the lower wall 111b of the upper part 110a of the coupling part 110. Alternatively, the lower wall 210a of the second body 200 may be formed as an inclined surface having a different inclination from that of the lower wall 111b of the upper part 110a of the coupling part 110. In this case, the lower wall 210a of the second body 200 may have a steeper slope than the lower wall 111b of the upper part 110a of the coupling part 110. Accordingly, the flow direction of the air discharged into the discharge space S can be guided primarily by the lower wall 111b of the upper part 110a of the coupling part 110 and can be guided secondarily upward from the air cleaner 1 by the lower wall 210a of the second body 200.

The lower wall 210a of the second body 200 may be connected to the lower wall 111b of the upper part 110a of the coupling part 110. The lower wall 210a of the second body 200 may be formed as a curved surface. The lower wall 210a may be formed as a curved surface having the same curvature as the lower wall 111b of the upper part 110a of the coupling part 110. Alternatively, the lower wall 210a of the second body 200 may be formed as an inclined surface having a different curvature from the lower wall 111b of the upper part 110a of the coupling part 110. In this case, the curvature of the lower wall 210a of the second body 200 may be greater than the curvature of the lower wall 111b of the upper part 110a of the coupling part 110. The degree of bending of the lower wall 210a of the second body 200 may be greater than the degree of bending of the lower wall 111b of the upper part 110a of the coupling part 110. Accordingly, the flow direction of the air discharged into the discharge space S can be guided primarily by the lower wall 111b of the upper part 110a of the coupling part 110, and can be guided secondarily upward from the air cleaner 1 by the lower wall 210a of the second body 200.

The lower body 210 may include an edge 214. The edge 214 of the lower body 210 may form the end of the lower wall 210a. The edge 214 of the lower body 210 may extend along the circumference of the second body 200. The edge 214 of the lower body 210 may be located at the outermost position in the radial direction from the central axis of the air cleaner 1.

The second body 200 may include an upper body 220. The upper body 220 may be placed on the lower body 210. The upper body 220 may be coupled to the top of the lower body 210. The upper body 220 may be coupled to the edge 214 of the lower body 210, and at least a portion of the lower body 210 may be spaced upward from the lower wall 210a. At least a portion of the upper body 220 may be in contact with the lower wall 210a. The lower body 210 and the upper body 220 may be formed as one piece. The upper body 220 may be formed in a bowl shape that is convex downward.

The upper body 220 may include a center part 221. The center part 221 may be formed in the central portion of the upper body 220. The center part 221 may be formed on the insertion recess 211 of the lower body 210. The center part 221 may be in contact with the first surface 211a of the insertion recess 211 of the lower body 210. The upper surface of the center part 221 may be formed as a flat surface, and the lower surface may be formed in a shape that can be fitted to the first surface 211a of the insertion recess 211.

The center part 221 may include a fastening hole 221a. The fastening hole 221a may penetrate the center part 221 and the first surface 211a of the insertion recess 221. The fastening hole 221a may penetrate the center part 221 and the second protrusion 212. The fastening member F may be inserted into the fastening hole 221a. The fastening hole 221a may include a plurality of fastening holes 221a. The plurality of fastening holes 221a may be spaced apart in the circumferential direction of the second body 200. The number of fastening holes 221a may correspond to the number of second protrusions 212.

The second part 221 may include a second mount hole 221b. The second mount hole 221b may be aligned with the first mount hole 213 in the vertical direction. The second mount hole 221b may be in communication with the first mount hole 213. The second mount hole 221b and the first mount hole 213 may form one mount hole 213 and 221b. The mount 113 may be inserted into the mount hole 213 and 221b. The inner space of the mount recess 113a may communicate with the space between the upper body 220 and a top cover 230 which will be described later.

The center part 221 may have a circular ring-shaped cross section. The outer diameter of the center part 221 may correspond to the diameter of the coupling part 110.

The upper body 220 may include an edge part 222. The outer edge area of the edge part 222 may be combined with the edge 214 of the lower body 210. The edge part 222 may be disposed at a higher position than the center part 221. The center part 221 and the edge part 222 may be disposed stepwise. The edge part 222 may be located further out in the radial direction than the center part 221. The edge part 222 may be formed as a flat surface. The edge part 222 may be in contact with the top cover 230 which will be described later.

The upper body 220 may include a middle part 223. The middle part 223 may be formed between the center part 221 and the edge part 222. The middle part 223 can connect the center part 221 and the edge part 222. The middle part 223 may extend radially outward from the center part 221. The middle part 223 may include a curved surface. For example, the middle part 223 may include a curved surface that is convex downward. The middle part 223 may be placed under the top cover 230 which will be described later. The middle part 223 may be spaced downward from the top cover 230.

The second body 200 may include the top cover 230. The top cover 230 may be disposed on the second body 200. The top cover 230 may be coupled to the second body 200. The top cover 230 may be coupled to the upper body 220. The top cover 230 may be coupled to the edge part 222 of the upper body 222. The top cover 230 may be spaced apart from the center part 221 and the middle part 223 of the upper body 222. The top cover 230 may cover the upper body 222. The top cover 230 may have a flat upper surface. For example, the top cover 230 may be formed as a flat plate. Accordingly, objects can be placed on the upper surface of the top cover 230. Accordingly, the second body 200 can be used as a table.

The top cover 230 may be detachably coupled to the second body 200. The upper body 220 may include a first member 222a. The first member 222a may be disposed on the edge part 222 of the upper body 220. The first member 222a may be built into the edge part 222 of the upper body 220. The top cover 230 may include a second member 231. The second member 231 may be disposed in the outer edge area of the top cover 230. The second member 231 may be built into the top cover 230. The second member 231 may be aligned with the first member 222a in the vertical direction. The first member 222a and the second member 231 may be in close contact with and/or fixed to each other when adjacent to each other. For example, one of the first member 222a and the second member 231 may be a magnetic member, and the other of the first member 222a and the second member 231 may be a metal member. For example, the first member 222a may be a magnet, and the second member 231 may be an iron plate. For example, the first member 222a may be an iron plate, and the second member 231 may be a magnet. As another example, the first member 222a and the second member 231 may be provided as magnets with different polarities. Accordingly, the top cover 230 can be easily separated from the second body 200. Therefore, the top cover 230 can be changed in various ways to have a material, color, and/or shape desired by the user.

The upper body 220 may include a plate 224a. The plate 224a may be located in the space formed between the center part 221 and the top cover 230. The plate 224a may protrude upward from the center part 221. Plate 224a may be formed between the center part 221 and the edge part 222. The upper surface of the plate 224a may be formed at a lower position than the upper surface of the edge part 222. The upper surface of the plate 224a may be formed at a higher position than the upper surface of the center part 221. The plate 224a may extend from the central portion of the center part 221 toward the edge part 222. For example, the plate 224a may have an oval-shaped cross section.

The upper body 220 may include a partition wall 224b. The partition wall 224b may extend upward from the edge of the plate 224a. The partition wall 224b may surround the outer edge of the plate 224a. The partition wall 224b may form the same plane as the upper surface of the second part 2220. The plate 224a and the partition wall 224b may be combined to form a recess.

A third mount hole (not shown) may be formed in the plate 224a. The third mount hole (not shown) may be vertically aligned with the first and second mount holes 213 and 221b. The third mount hole (not shown) may communicate with the first and second mount holes 213 and 221b. The mount 113 can be inserted into the third mount hole (not shown). The upper end of the side wall 113c of the mount 113 may be disposed on the same plane as the top surface of the plate 224a. The space of the mount recess 113a may communicate with the space formed by the plate 224a and the partition wall 224b.

The air cleaner 1 may include a wireless charging device 240. The wireless charging device 240 may be located on the plate 224a. The wireless charging device 240 may be connected to the connection terminal 113d mounted on the mount 113 through a connection member (not shown). A hole 232 may be formed in the top cover 230. The wireless charging device 240 can be inserted into the hole 232 of the top cover 230. The wireless charging device 240 may be exposed from the upper surface of the top cover 230 through the hole 232 of the top cover 230. The user can charge an electronic device by placing the electronic device on the wireless charging device 240 exposed from the upper side of the top cover 230. The upper surface of the wireless charging device 240 may form the same plane as the upper surface of the top cover 230.

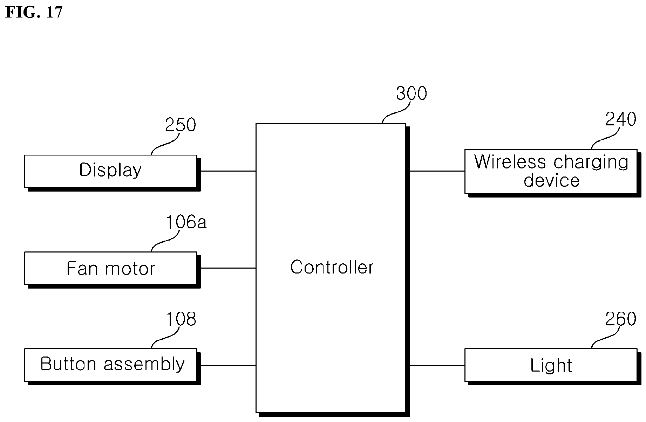

The air cleaner 1 may include a button assembly 108 (refer to FIG. 17). The button assembly 108 (refer to FIG. 17) may be electrically connected to the fan 106 (refer to FIG. 5). The button assembly 108 (refer to FIG. 17) may be disposed on the second body 200. The button assembly 108 (refer to FIG. 17) may be disposed on the lower body 210 of the second body 200. The button assembly 108 (refer to FIG. 17) may be exposed from the lower wall 210a of the lower body 210. The button assembly 108 (refer to FIG. 17) may protrude downward from the lower wall 210a. Alternatively, the button assembly 108 (refer to FIG. 17) may be disposed on the same plane as the lower wall 210a. The button assembly 108 (refer to FIG. 17) may be a button type or a touch type. The user can control the operating state of the fan 106 (refer to FIG. 5) by manipulating the button assembly 108 (refer to FIG. 17).

The air cleaner 1 may include a display 250. The display 250 may be disposed on the second body 200. The display 250 may be placed on the edge part 222 of the upper body 220. A recess (not shown) in which the display 250 is placed may be formed in the edge part 222. A hole (not shown) may be formed in the top cover 230, and the display 250 may be exposed from the upper surface of the top cover 230 through the hole (not shown) of the top cover 230. The display 250 may be electrically connected to the button assembly 108 (refer to FIG. 17). The display 250 and the button assembly 108 (refer to FIG. 17) may be aligned vertically. The display 250 may be disposed above the button assembly 108 (refer to FIG. 17). The user can check the operating state of the air cleaner 1 through the display 240 exposed on the upper side of the top cover 230.

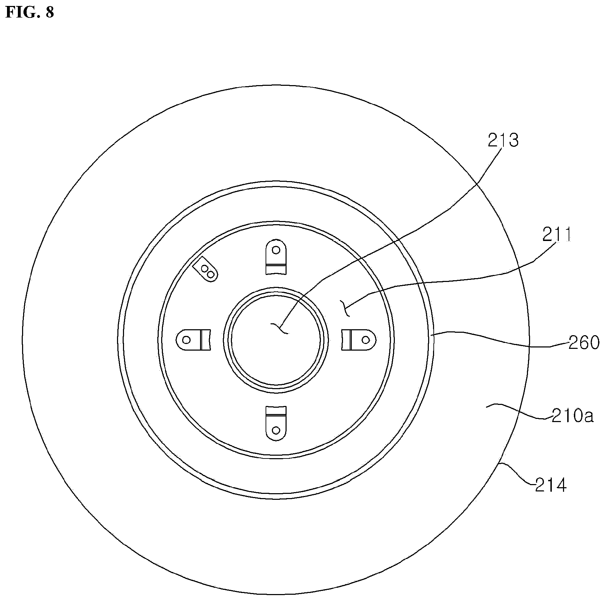

Referring to FIG. 8, the air cleaner 1 may include a light 260. The light 260 may be disposed on the second body 200. The light 260 may be disposed on the lower body 210 of the second body 200. The light 260 may be exposed through the lower wall 210a of the lower body 210. The light 260 may be formed in a circular ring shape. The light 260 may surround the insertion recess 211 or the coupling part 110. The light 260 can radiate light to the lower side of the air cleaner 1. The light 260 may be disposed closer to the insertion recess 211 than the edge 214 of the lower body 210. For example, the light 260 may be provided as an LED.

The light 260 may be electrically connected to the wireless charging device 240. The light 260 is placed on the wireless charging device 240 and can indicate the charging state of an electronic device being charged by the wireless charging device 240. A controller 300 of the air cleaner 1 may operate the light 260 such that the light blinks when charging of the electronic device charged by the wireless charging device 240 is completed. Alternatively, the controller 300 of the air cleaner 1 may operate the light 260 to change the color thereof when charging of the electronic device charged by the wireless charging device 240 is completed.

The first body 100 may be referred to as an air cleaning module 100. The second body 200 may be referred to as a table module 200.

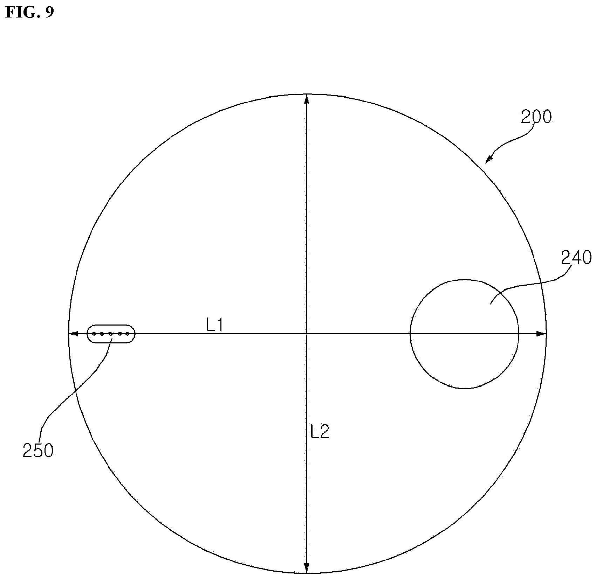

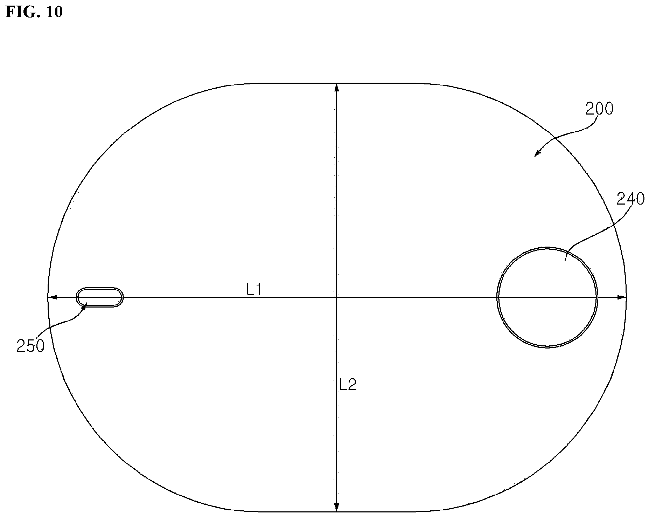

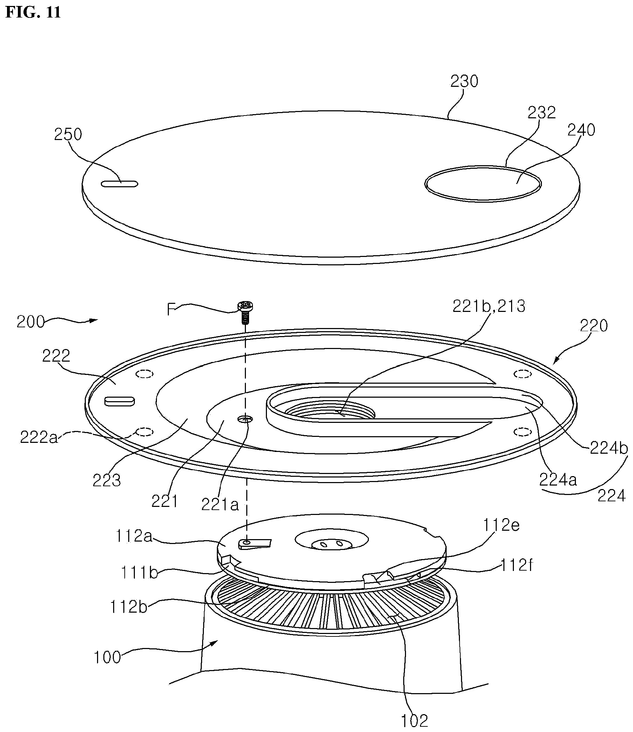

Referring to FIG. 9 and FIG. 10, the second body 200 may be provided in various shapes. Referring to FIG. 9, the second body 200 may be provided as a table in a circular shape in which a first length L1 in a first direction is the same as a second length L2 in a second direction perpendicular to the second direction. Referring to FIG. 10 and FIG. 11, the second body 200 may have an oval shape in which the first length L1 in the first direction is greater than the second length L2 in the second direction perpendicular to the second direction. In addition, the second body 200 may have various shapes, such as a rectangular table, a polygonal table, and an irregularly shaped table. The user can use the second body 200 of a desired shape by combining the same with the first body 100. The user can remove the top cover 230, which is coupled to the second body 200 by magnetic force, and then remove the fastening member F to separate the second body 200 from the first body 100. The user can fasten the second body 200 to the first body 100 through the fastening member F, and then couple the top cover 230 to the second body 200 to combine the second body 200 with the first body 100.

Referring to FIG. 11, the upper part 110a may include coupling recesses 112e and 112f. The coupling recesses 112e and 112f may be formed in the second part 112. The coupling recesses 112e and 112f may be formed in the edge area of the second part 112. The coupling recesses 112e and 112f may include a first coupling recess 112e that is recessed downward from the upper wall 112a of the second part 112, and a second coupling recess 112f extending by a predetermined length in the circumferential direction of the upper part 110a from the first coupling recess 112e. The first coupling recess 112e may be open to the upper side of the upper part 110a. The second coupling recess 112f may be formed between the upper wall 112a and the first part 111.

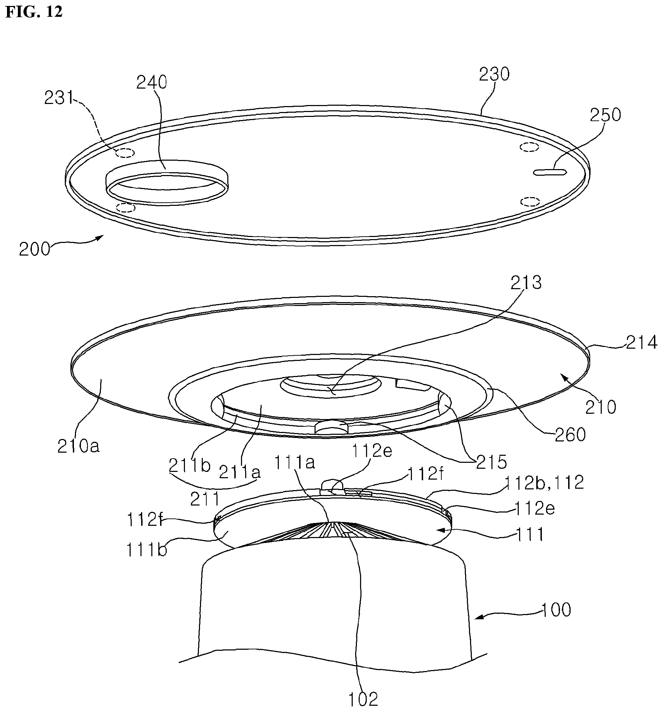

Referring to FIG. 12, the second body 200 may include a coupling protrusion 215. The coupling protrusion 215 may be formed on the lower body 210. The coupling protrusion 215 may be formed on the second surface 211b of the insertion recess 211. The coupling protrusion 215 may protrude inward from the second surface 211b of the insertion recess 211. The coupling protrusion 215 may be vertically aligned with the coupling recesses 112e and 112f. The coupling protrusion 215 may have a height corresponding to the vertical height of the second coupling recess 112f.

The second body 200 can be moved downward with the coupling protrusion 215 and the first coupling recess 112e aligned vertically, and the coupling protrusion 215 can be inserted into the first coupling recess 112e. The second body 200 can be rotated in the direction in which the second coupling recess 112f is formed in a state in which the coupling protrusion 215 is inserted into the first coupling recess 112e, and the coupling protrusion 215 can be inserted into the coupling recess 112f. Accordingly, the second body 200 can be combined with and fixed to the coupling part 110.

In order to increase the fixing force between the coupling part 110 and the second body 200, the second body 200 may be fixed to the coupling part 110 through the fastening member F. In this case, one fastening member F may be used. Accordingly, the second body 200 can be more easily separated from the first body 100.

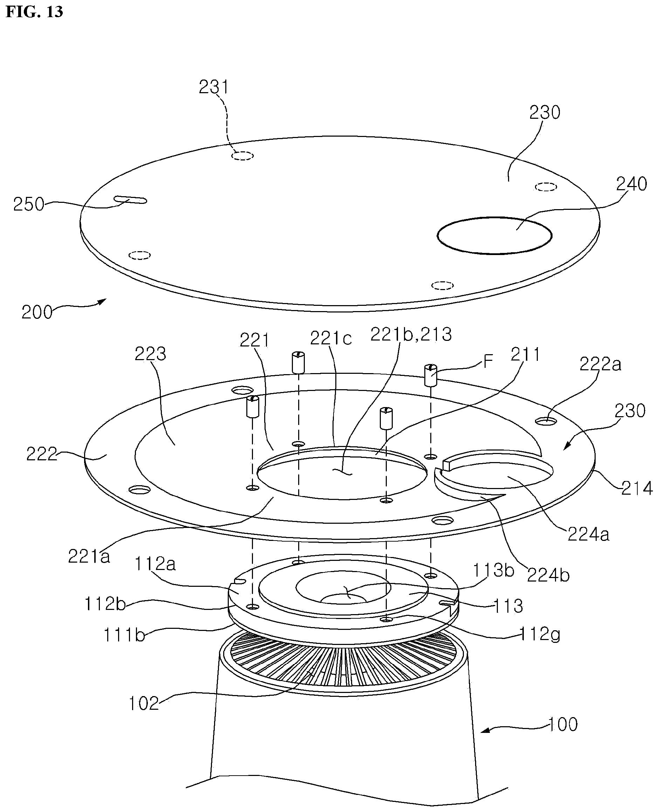

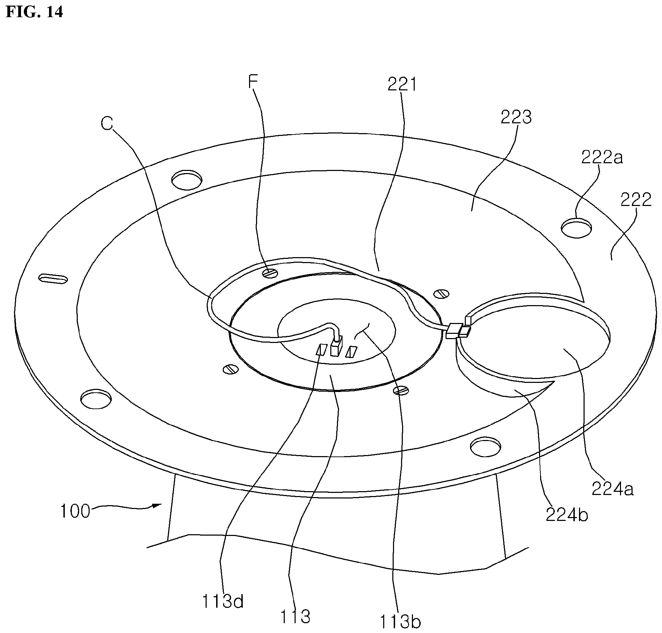

Referring to FIG. 13 and FIG. 14, the second body 200 may include the upper body 220. The upper body 220 may be placed on the lower body 210. The upper body 220 may be combined with the lower body 210. The upper body 220 may be coupled to the edge 214 of the lower body 210. At least a portion of the upper body 220 may be in contact with the lower wall 210a. The lower body 210 and the upper body 220 may be formed as one piece. The upper body 220 may be formed in a bowl shape that is convex downward.

The upper body 220 may include the center part 221. The center part 221 may be formed in the central portion of the upper body 220. The center part 221 may be formed on the insertion recess 211 of the lower body 210. The center part 221 may be in contact with the first surface 211a of the insertion recess 211 of the lower body 210. The upper surface of the center part 221 may be formed as a flat surface, and the lower surface may be formed in a shape that can be fitted to the first surface 211a of the insertion recess 211.

The center part 221 may include the second mount hole 221b. The second mount hole 221b may be vertically aligned with the first mount hole 213. The second mount hole 221b may communicate with the first mount hole 213. The second mount hole 221b and the first mount hole 213 may form one mount hole 213 and 221b. The mount 113 may be inserted into the mount hole 213 and 221b. The inner space of the mount recess 113a may communicate with the space between the upper body 220 and the top cover 230 which will be described later.

The center part 221 may include a cover part 221c in which the second mount hole 221b is formed. The second mount hole 221b may have a smaller diameter than the first mount hole 213. Accordingly, the cover part 221c may protrude inward from the inner surface of the first mount hole 213. The cover part 221c may cover a portion of the second mount hole 213.

The center part 221 may include the fastening hole 221a. The fastening hole 221a may be formed in the cover part 221c. A fastening member F may be inserted into the fastening hole 221a. The fastening hole 221a may include a plurality of fastening holes 221a. The plurality of fastening holes 221a may be spaced apart in the circumferential direction of the second mount hole 213. The number of fastening holes 221a may correspond to the number of second protrusions 212.

The center part 221 may have a circular ring-shaped cross section.

The upper body 220 may include the edge part 222. The outer edge area of the edge part 222 may be combined with the edge 214 of the lower body 210. The edge part 222 may be placed at a higher position than the center part 221. The center part 221 and the edge part 222 may be disposed stepwise. The edge part 222 may be located further out in the radial direction than the center part 221. The edge part 222 may be formed as a flat surface. The edge part 222 may be in contact with the top cover 230 which will be described later.

The upper body 220 may include the middle part 223. The middle part 223 may be formed between the center part 221 and the edge part 222. The middle part 223 can connect the center part 221 and the edge part 222. The middle part 223 may extend radially outward from the center part 221. The middle part 223 may include a curved surface. For example, the middle part 223 may include a curved surface that is convex downward. The middle part 223 may be placed under the top cover 230 which will be described later. The middle part 223 may be spaced downward from the top cover 230.

The second body 200 may include the top cover 230. The top cover 230 may be disposed on the second body 200. The top cover 230 may be coupled to the second body 200. The top cover 230 may be coupled to the upper body 220. The top cover 230 may be coupled to the edge part 222 of the upper body 222. The top cover 230 may be spaced apart from the center part 221 and the middle part 223 of the upper body 222. The top cover 230 may cover the upper body 222. The top cover 230 may have a flat upper surface. For example, the top cover 230 may be formed as a flat plate. Accordingly, objects can be placed on the upper surface of the top cover 230. The second body 200 can be used as a table.

The top cover 230 may be detachably coupled to the second body 200. The upper body 220 may include the first member 222a. The first member 222a may be disposed on the edge part 222 of the upper body 220. The first member 222a may be built into the edge part 222 of the upper body 220. The top cover 230 may include the second member 231. The second member 231 may be disposed in the outer edge area of the top cover 230. The second member 231 may be built into the top cover 230. The second member 231 may be aligned with the first member 222a in the vertical direction. The first member 222a and the second member 231 may be in close contact with and/or fixed to each other when adjacent to each other. For example, one of the first member 222a and the second member 231 may be a magnetic member, and the other of the first member 222a and the second member 231 may be a metal member. For example, the first member 222a may be a magnet, and the second member 231 may be an iron plate. For example, the first member 222a may be an iron plate, and the second member 231 may be a magnet. As another example, the first member 222a and the second member 231 may be provided as magnets with different polarities. Accordingly, the top cover 230 can be easily separated from the second body 200. Therefore, the top cover 230 can be changed in various ways to have a material, color, and/or shape desired by the user.

The second body 200 may include the plate 224a. The plate 224a may be disposed on the upper body 220. The plate 224a may be located in the space formed between the center part 221 and the top cover 230. The plate 224a may protrude upward from the center part 221. The plate 224a may be disposed outside the cover part 221c. The plate 224a may be placed outside the second mount hole 221b. The plate 224a may be formed between the center part 221 and the edge part 222. The upper surface of the plate 224a may be formed at a lower position than the upper surface of the edge part 222. The upper surface of the plate 224a may be formed at a higher position than the upper surface of the center part 221. For example, the plate 224a may have a circular cross section. The plate 224a may have a shape and size corresponding to the wireless charging device 240 which will be described later.

The second body 200 may include the partition wall 224b. The partition wall 224b may extend upward from the edge of the plate 224a. The partition wall 224b may surround the outer edge of the plate 224a. The partition wall 224b may form the same plane as the upper surface of the second part 2220. The plate 224a and the partition wall 224b can be combined to form a recess. A recess (not indicated, refer to FIG. 14) in which the end of a connecting member C accommodated in the mount recess 113a is fixed may be formed in the partition wall 224c. Accordingly, the wireless charging device 240 seated on the plate 224a can be connected to the connecting member C and can be electrically connected to the connection terminal 113d. The partition wall 224b may surround the circumference of the wireless charging device 240.

The upper part 110a of the coupling part 110 may include the first part 111 and the second part 112 coupled to the first part 111. The first part 111 and the second part 112 may be formed as one piece. The first part 111 may include the lower wall 111b. The lower wall 111b may face the discharge port 102. The lower wall 111b may be located above the discharge port 102 and may be spaced apart from the discharge port 102. A discharge space S may be formed between the lower wall 111b and the discharge port 102. The lower wall 111b may extend radially from the boundary portion 111a. For example, the lower wall 111b may be formed in an annular shape. The lower wall 111b may be inclined upward and extend from the boundary portion 111a. The lower wall 111b may be inclined upward toward the radial outer side of the air cleaner 1. The vertical distance between the lower wall 111b and the discharge grill 102a may increase with increasing distance from the central axis of the first body 100.

The second part 112 may extend upward from the first part 111. The second part 112 may be inserted into the insertion recess 211 of the lower body 210. The second part 112 may include the upper wall 112a and the side wall 112b. The upper wall 112a of the second part 112 may be formed as a flat surface. A mount recess 113b into which the mount 113 is inserted may be formed in the central area of the upper wall 112a. The outer edge area of the upper wall 112a may face the cover part 221c vertically. A fastening recess 112g may be formed in the outer edge area of the second part 112. The fastening recess 112g may face the fastening hole 221a vertically. The fastening member F may penetrate the fastening hole 221a and the fastening recess 112g. Accordingly, the second body 100 can be fixed to the coupling part 110. The mount recess 113b may communicate with the mount holes 221b and 213.

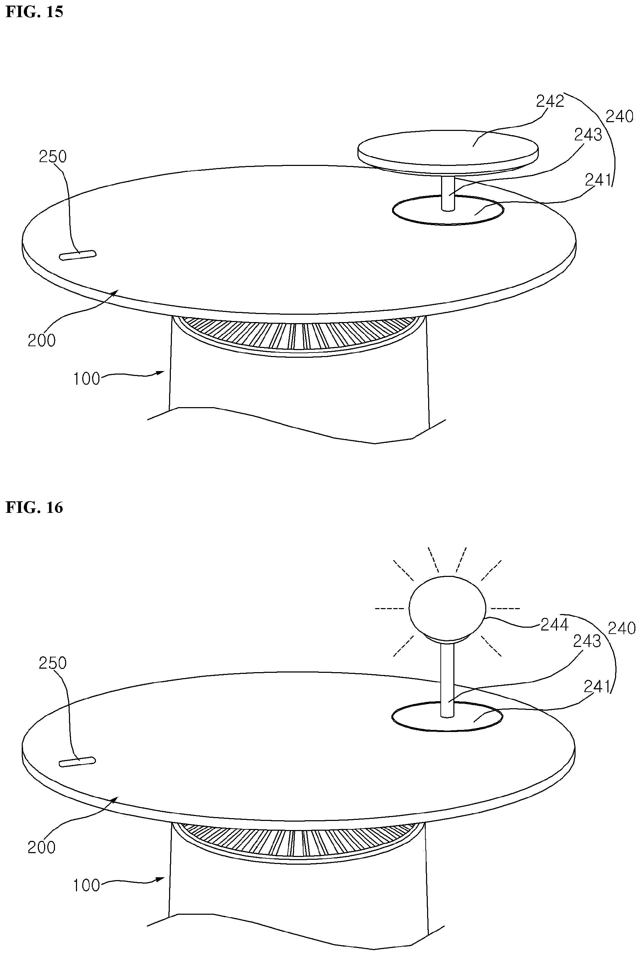

Referring to FIG. 15, the wireless charging device 240 may be formed in two stages. The wireless charging device 240 may include a first wireless charging unit 241. The first wireless charging unit 241 may be disposed in the second body 200. The first wireless charging unit 241 may be placed on the plate 224a of the second body 200 and may be electrically connected to the connection terminal 113d of the mount 113 through a connecting member (not shown). The wireless charging device 240 may include a second wireless charging unit 242. The second wireless charging unit 242 may be disposed above the first wireless charging unit 241. The second wireless charging unit 242 may be spaced upward from the first wireless charging unit 241. The wireless charging device 240 may include a vertical member 243. The vertical member 243 may be disposed between the first wireless charging unit 241 and the second wireless charging unit 242. The lower end of the vertical member 243 may be coupled to the first wireless charging unit 241, and the upper end of the vertical member 243 may be coupled to the second wireless charging unit 242. The vertical member 243 may space the second wireless charging unit 242 from the first wireless charging unit 241 in the vertical direction. The vertical member 243 may electrically connect the first wireless charging unit 241 and the second wireless charging unit 242. For example, the vertical member 243 may be provided as a hollow pipe, and a connecting member (not shown) such as a cable for connecting the first wireless charging unit 242 and the second wireless charging unit 242 may be placed inside the vertical member 243. The second wireless charging unit 242 may have a larger area than the first wireless charging unit 241. Accordingly, a wireless charging area can be expanded.

Referring to FIG. 16, the wireless charging device 240 may be formed in two stages. The wireless charging device 240 may include a first wireless charging unit 241. The first wireless charging unit 214 may be disposed in the second body 200. The first wireless charging unit 241 may be placed on the plate 224a of the second body 200 and may be electrically connected to the connection terminal 113d of the mount 113 through a connecting member (not shown). The wireless charging device 240 may include a lamp 244. The lamp 244 may be placed above the first wireless charging unit 241. The lamp 244 may be spaced upward from the first wireless charging unit 241. The wireless charging device 240 may include a vertical member 243. The vertical member 243 may be disposed between the first wireless charging unit 241 and the lamp 244. The lower end of the vertical member 243 may be coupled to the first wireless charging unit 241, and the upper end of the vertical member 243 may be coupled to the lamp 244. The vertical member 243 may space the lamp 244 from the first wireless charging unit 241 in the vertical direction. The vertical member 243 may electrically connect the first wireless charging unit 241 and the lamp 244. For example, the vertical member 243 may be provided as a hollow pipe, and a connecting member (not shown) such as a cable for connecting the first wireless charging unit 241 and the lamp 244 may be placed inside the vertical member 243. The lamp 244 may be provided as an LED. The lamp 244 may receive power from the first wireless charging unit 241 and radiate light. The user can separate the first wireless charging unit 241 from the second body 200. Accordingly, the user can use the lamp 244 portably. The user can separate the lamp 244 from the wireless charging device 400. Accordingly, the user can use the lamp 244 portably.

Referring to FIG. 17, the air cleaner 1 may include the controller 300. The controller 300 can control the air cleaner 1. The controller 300 can control internal components of the air cleaner 1. The controller 300 can control the button assembly 108. The controller 300 can control the fan motor 106a. The controller 300 can control the display 250. The controller 300 can rotate the fan motor 106a according to a signal value of the button assembly 108. For example, the button assembly 108 may include first to third buttons (not shown) for transmitting different signal values. When the first button (not shown) is pressed, the controller 300 may rotate the fan motor 106a at a rotation speed corresponding to the signal value of the first button (not shown). The controller 300 may display the current state of the air cleaner 1 on the display 250 in response to a signal value of the button assembly 108.

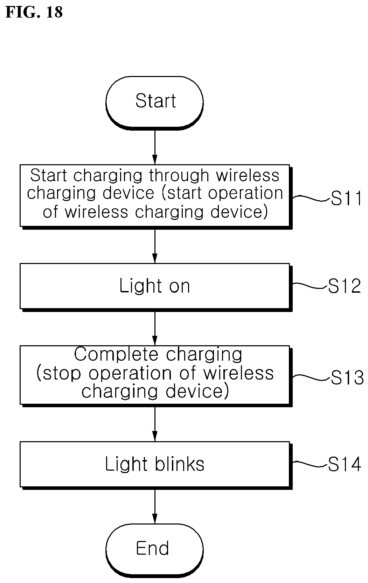

Referring to FIG. 17 and FIG. 18, the controller 300 can control the wireless charging device 240. The controller 300 can control the light 260. The controller 300 may control the light 260 in association with the wireless charging device 240. The controller 300 can control the on/off, color, brightness, etc. of the light 260 by reflecting the charging operation state of the wireless charging device 240. The controller 300 can control the on/off, color, brightness, etc. of the light 260 by reflecting the operating state of the lamp 244 of the wireless charging device 240.

When an electronic device is being charged through the wireless charging device 240 (S11), the controller 300 may control the light 260 such that the light 260 is turned on (S12). When charging of the electronic device through the wireless charging device 240 is completed (S13), the controller 300 may control the lighting 260 such that the light 260 blinks (S14).

Alternatively, the controller 300 may control the light 260 to maintain a first color when the electronic device is being charged through the wireless charging device 240. When charging of the electronic device through the wireless charging device 240 is completed, the controller 300 may control the light 260 to have a second color that is different from the first color.

Alternatively, the controller 300 may control the light 260 to maintain a first brightness when the electronic device is being charged through the wireless charging device 240. When charging of the electronic device through the wireless charging device 240 is completed, the controller 300 may control the light 260 to have a second brightness that is different from the first color.

The controller 300 may control the light 260 such that the light 260 is turned on when the lamp 244 is coupled to the wireless charging device 240. The controller 300 may control the light 260 such that the light 260 blinks or is turned off when the lamp 244 is separated from the wireless charging device 240.

Alternatively, the controller 300 may control the light 260 to maintain the first color when the lamp 244 is coupled to the wireless charging device 240. When the lamp 244 is separated from the wireless charging device 240, the controller 300 may control the light 260 to have the second color that is different from the first color.

Alternatively, the controller 300 may control the light 260 to maintain the first brightness when the lamp 244 is coupled to the wireless charging device 240. When the lamp 244 is separated from the wireless charging device 240, the controller 300 may control the light 260 to have the second brightness that is different from the first color.

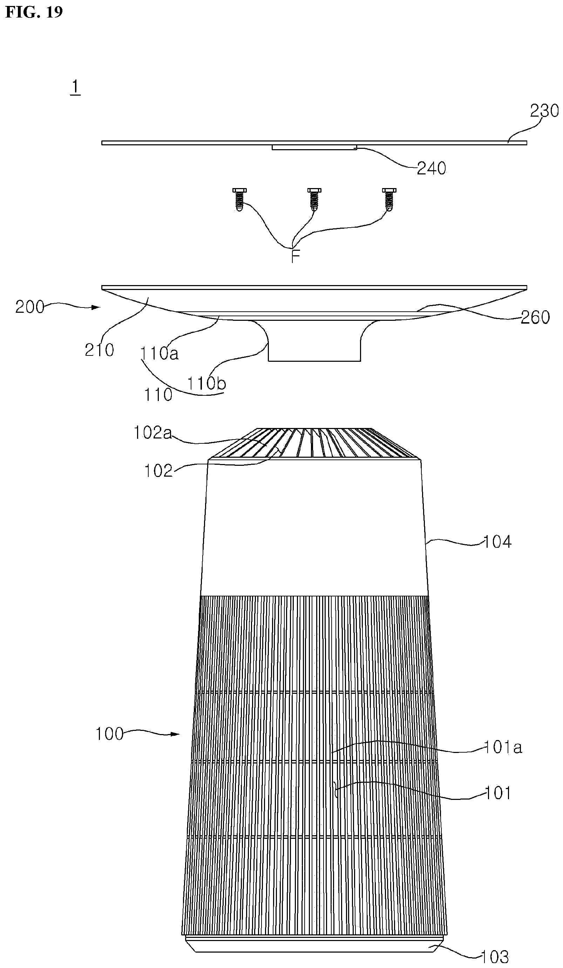

Referring to FIG. 19, an air cleaner 1' may include a first body 100 and a second body 200 detachably coupled to the first body 100. The air cleaner 11 may include a top cover 230 that covers the upper surface of the second body 200 and is detachably coupled to the upper surface of the second body 200. The second body 200 may be fastened to the first body 100 through a fastening member F. The top cover 230 may be coupled to the second body 200 through a magnetic member.

A coupling part 110 may be formed between the second body 200 and the first body 100. The coupling part 110 may include an upper part 110a and a lower part 110b. A discharge grille 102a may be coupled to the boundary formed between the upper part 110a and the lower part 110b. The coupling part 110 may be formed integrally with the second body 200. The coupling part 110 may be separated from the first body 100 along with the second body 200.

Although preferred embodiments of the present disclosure have been shown and described above, the present disclosure is not limited to the specific embodiments described above and various modifications can be made by those skilled in the art without departing from the gist of the present disclosure as claimed in the claims. Such modifications should not be understood individually from the technical idea or perspective of the present disclosure.

The present disclosure may be modified and implemented in various forms, and the scope of the present disclosure is not limited to the above-described embodiments. Therefore, if a modified embodiment includes elements of the claims of the present disclosure, it should be regarded as falling within the scope of the present disclosure.

Any or other embodiments of the present disclosure described above are not exclusive or distinct from each other. In certain embodiments or other embodiments of the present disclosure described above, components or functions may be used in combination or combined.

For example, this means that component A described in a particular embodiment and/or drawing may be combined with component B described in another embodiment and/or drawing. In other words, even if combination between components is not directly described, it means that combination is possible, except in cases where it is described that combination is impossible.

The above detailed description should not be construed as restrictive in any respect and should be considered illustrative. The scope of the present disclosure should be determined by reasonable interpretation of the appended claims, and all changes within the equivalent scope of the present disclosure are included in the scope of the present disclosure.

## Claims

1. An air cleaner comprising:
a first body including an intake port and a discharge port;
a fan disposed inside the first body and disposed between the intake port and the discharge port; and
a second body facing the discharge port, spaced apart from the discharge port, and detachably coupled to the first body,
wherein the second body is formed to be larger than the discharge port.

2. The air cleaner of claim 1, wherein a path is formed between the discharge port and the second body, the path being formed over 360 degrees.

3. The air cleaner of claim 1, wherein the second body comprises a lower wall facing the discharge port,
wherein the lower wall of the second body extends curved upward in a direction perpendicular to a longitudinal direction of the first body.

4. The air cleaner of claim 1, wherein the first body comprises a coupling part disposed between the first body and the second body and coupled to the second body,
wherein the coupling part comprises:
a first part facing the discharge port and including a lower wall spaced apart from the discharge port; and
a second part extending upward from the first part and coupled to the second body, and
the lower wall of the second body is connected to the lower wall of the first part and does not overlap the discharge port in the longitudinal direction of the first body.

5. The air cleaner of claim 4, wherein the lower wall of the first part extends curved upward in a direction perpendicular to the longitudinal direction of the first body, and
the lower wall of the second body is formed to curve upward from the lower wall of the first part in the direction perpendicular to the longitudinal direction of the first body.

6. The air cleaner of claim 5, wherein the lower wall of the first part has a first curvature, and the lower wall of the second body has a second curvature greater than the first curvature.

7. The air cleaner of claim 4, wherein the first body comprises a discharge grill, one end of which is coupled to an edge of the discharge port and the other end of which is coupled to the lower wall of the first part,
wherein the other end of the discharge grill is disposed inside an edge of the lower wall of the first part.

8. The air cleaner of claim 4, wherein the second body comprises:
a lower body including the lower wall of the second body; and
an upper body disposed on the lower body,
wherein the lower body includes an insertion recess formed in the lower wall of the lower body, the second part of the coupling part being inserted into the insertion recess.

9. The air cleaner of claim 8, wherein the coupling part comprises a first protrusion protruding from the upper wall of the second part and having a height increasing toward the radial outer side of the coupling part,
the second body includes a second protrusion formed in the insertion recess of the lower body, having a height decreasing toward the radial outer side of the first body, and aligned with the first protrusion vertically,
a contact surface of the first protrusion and the second protrusion forms a flat surface, and
the second body is fixed to the coupling part through a fastening member coupled to the first protrusion by penetrating the second protrusion.

10. The air cleaner of claim 8, wherein the coupling part comprises a coupling recess formed in a side wall of the second part,
the coupling recess comprises:
a first coupling recess formed in the side wall of the second part and open to the upper wall of the second part; and
a second coupling recess extending from the first coupling recess by a predetermined length along the circumference of the second part and formed between the upper wall of the second part and the lower wall of the first part,
the insertion recess of the second body comprises:
a first surface facing the upper wall of the second part;
a second surface connected to the first surface; and
a coupling protrusion protruding from the second surface and aligned with the first coupling recess vertically, and
the coupling protrusion is moved from the first coupling recess to the second coupling recess when the second body is rotated.

11. The air cleaner of claim 1, comprising a top cover coupled to the upper surface of the second body,
wherein the top cover is formed in a flat shape.

12. The air cleaner of claim 11, wherein the second body comprises a first member,
the top cover comprises a second member coupled to the first member,
one of the first member and the second member is provided as a magnet, and
the other one of the first member and the second member is provided as a metal member.

13. The air cleaner of claim 12, wherein the second body comprises:
a lower body including the lower wall of the second body; and
an upper body disposed between the lower body and the top cover,
the upper body comprises:
a center part coupled to the lower wall of the lower body;
an edge part located at a higher position than the center part and including a flat surface; and
a middle part connecting the center part and the edge part and spaced vertically from the lower wall of the lower body, and
the first member is disposed on the edge part.

14. The air cleaner of claim 13, comprising a wireless charging device disposed on the second body and exposed from the upper surface of the top cover,
wherein the second body comprises a plate protruding upward from the center part and formed at a lower position than the edge part, and a partition wall surrounding the circumference of the plate and disposed on the same plane as the edge part, and
the wireless charging device is disposed in a space defined by the plate and the partition wall.

15. The air cleaner of claim 13, comprising a wireless charging device disposed on the second body and exposed from the upper surface of the top cover,
wherein the wireless charging device comprises:
a first wireless charging unit disposed on the second body;
a second wireless charging unit disposed above the first wireless charging unit and having a larger area than the first wireless charging unit; and
a vertical member disposed between the first wireless charging unit and the second wireless charging unit and electrically connecting the first wireless charging unit and the second wireless charging unit.

16. The air cleaner of claim 13, comprising a wireless charging device disposed on the second body and exposed from the upper surface of the top cover,
wherein the wireless charging device comprises:
a wireless charging unit disposed on the second body;
a vertical member electrically connected to the wireless charging unit and extending upward from the wireless charging unit; and
a lamp coupled to the vertical member and electrically connected to the vertical member, and
wherein the wireless charging device is detachable from the second body.

17. The air cleaner of claim 1, comprising a light disposed on the lower wall of the second body and radiating light to a lower side of the second body.

18. The air cleaner of claim 17, comprising a wireless charging device disposed on the second body, and a controller for controlling the wireless charging device and the light,
wherein the controller controls on/off of the light in association with the wireless charging device.

19. The air cleaner of claim 18, wherein the controller controls the light such that the light is turned on when the wireless charging device is operated, and
the controller controls the light such that the light blinks when operation of the wireless charging device is stopped.
